Europäisches Patentamt

European Patent Office

Office européen des brevets

(19)

(11) Publication number: **0 198 667 B1**

# EUROPEAN PATENT SPECIFICATION

(12)

(45) Date of publication of patent specification: **12.02.92**   (51) Int. Cl.⁵: **B60S  9/04**

(21) Application number: **86302653.0**

(22) Date of filing: **10.04.86**

(54) Improvements relating to landing gear.

(30) Priority: **13.04.85 GB 8509525**

(43) Date of publication of application:
**22.10.86 Bulletin  86/43**

(45) Publication of the grant of the patent:
**12.02.92 Bulletin  92/07**

(84) Designated Contracting States:
**BE DE FR GB IT NL SE**

(56) References cited:
**FR-A- 1 581 489       US-A- 3 077 120**
**US-A- 3 201 087       US-A- 3 895 682**
**US-A- 4 097 840       US-A- 4 129 322**

(73) Proprietor: **MULTI-STROKE HANDBRAKE CONTROLS LIMITED**
**Green Lane**
**Tewkesbury Gloucestershire GL20 8HD(GB)**

(72) Inventor: **Elkins, Gordon Charles**
**Baldham Mill Seend**
**Melksham Wiltshire(GB)**
Inventor: **Lowden, George Alan**
**138 Littlehampton Road**
**Ferring Worthing West Sussex(GB)**

(74) Representative: **Pacitti, Pierpaolo A.M.E. et al**
**Murgitroyd and Company Mitchell House 333**
**Bath Street**
**Glasgow G2 4ER Scotland(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is concerned with improvements in systems suitable for use in controlling landing gear, especially landing gear of tractor-trailer combinations.

Tractor-trailer landing gear is used to provide support for one end of the trailer on which is located the fifth wheel and to raise that end of the trailer in order that the fifth wheel may be disengaged from the tractor which can then be driven away from the trailer.

Generally the telescopic trailer legs which form the landing gear are maintained in a locked-up position

with the wheel or other foot support raised well above ground level. In use the telescopic legs are first extended until the wheel or supports make contact with the ground and subsequently the legs are further extended to raise the trailer to disengage the fifth wheel.

Generally the telescopic legs are extended manually by a crank means operating through a suitable gear arrangement located at the top of one of the legs. A shaft passing from one leg to the other ensures that both legs are extended simultaneously to the same extent.

It has been proposed to use pneumatic or hydro-pneumatic systems to extend the legs, for example as described in GB-A-1,099,599. However such systems generally suffer from the disadvantage that the tractor or trailer requires to be fitted with large air reservoirs to provide the air necessary to raise the trailer in reasonable time, or expensive pressurising equipment.

It has also been proposed to operate the telescopic legs by use of electric motors, however such motors need to have a high rating, for example 15-20 amps, normally requiring that heavy duty slave batteries be located on the trailer.

We have now provided a means of operating the telescopic landing gear through the action of a flywheel driving the drive shaft of the landing gear through a suitable clutch mechanism, motion to the flywheel being imparted by means of a low rated (say 6 to 7 amps) electric motor. Such an electric motor does not require the use of heavy duty batteries and may, for example be run off the normal tractor lighting circuit or other suitable source of electrical power. The device of this invention therefore employs the kinetic energy contained in the rotating flywheel to provide the power to extend the legs of the landing gear and to raise the end of the trailer to a height sufficient to allow the fifth wheel to be disengaged from the trailer.

The device of the present invention is designed to function in co-operation with a standard landing gear normally operated by a crank handle and provision may be made for the gear to be operated manually through such a handle in the event of failure of the electric system, for example. The device is, of course, not limited to use with any specific form of landing gear and, indeed, it may be used in combination with any equipment utilizing telescopically extending members.

One embodiment of the present invention will now be described with reference to the accompanying illustrative drawings in which:-

Fig.1 is a representation of a tractor-trailer combination including a mechanism of the present invention for raising and lowering the trailer landing gear;

Fig.2 is a representation of one leg of a landing gear including the mechanism of the present invention.

Fig.3 represents a device of the present invention for attachment to the trailer landing gear of Fig.2;

Fig.4 is a cross section through A-A of Fig.1;

Fig.5 is a front elevation of the drive of Fig. 2 along the line B-B.

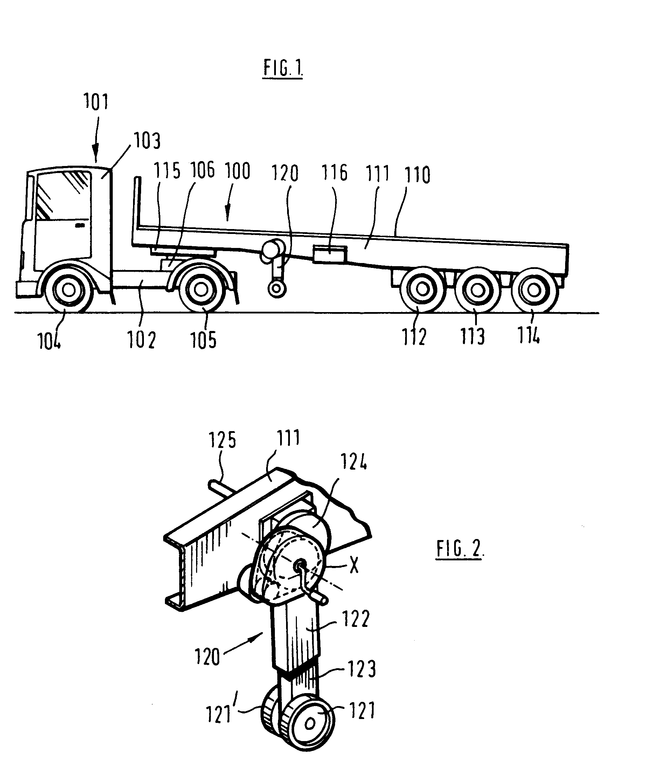

Referring now to Fig.1 of the drawings, a tractor trailer combination generally indicated at 100 comprises a tractor 101 having a chassis 102, a cab 103, front and rear wheels 104 and 105 and a fifth wheel 106 carried on the chassis 102 to which the trailer 110 is detachably secured. Trailer 110 comprises a chassis 111, three sets of rear wheels 112, 113 and 114 and means 115 for attachment to the fifth wheel 106 of tractor 101. Landing gear 120 is carried at the forward end of chassis 111 and is shown in the retracted position. A slave battery 116 is also carried on chassis 111.

In Fig. 2 landing gear 120 is secured to the chassis 111 of trailer 110 and comprises ground engaging wheels 121, 121' upper leg 122 secured to the chassis 111 and telescopic leg 123. The telescopic leg is driven via gears 124 and landing gear drive shaft (not shown) by the mechanism of the present invention generally indicated at X. A second landing gear drive shaft 125 drives the landing gear carried on the opposite side of the chassis (not shown).

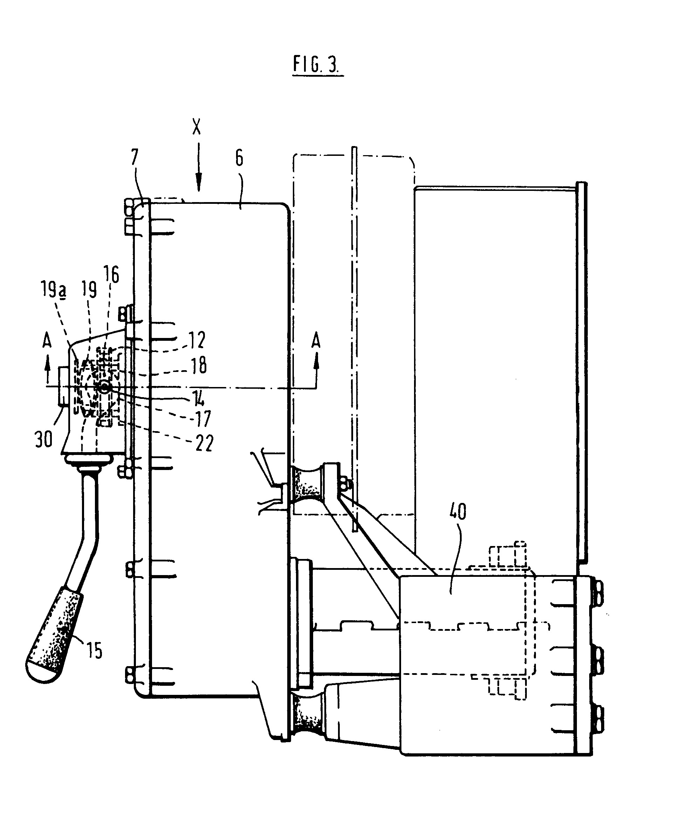

Referring to Figures 3, 4 and 5 of the drawings; Flywheel 1 is keyed onto a hollow shaft 2 through key 3 and Shaft 2 is mounted in bearing assemblies 4 and 5 located in rear cover assembly 6 and front cover assembly 7 respectively. The inner end 2a of shaft 2 is flared to provide a frusto-conical surface 2b which forms the outer face of a cone-clutch assembly. A hollow inner shaft 11 forming the inner cone-clutch assembly and having a frusto-conical portion 11a for engagement with surface 2b of shaft 2, is located within and extends into shaft 2 and is pinned onto drive shaft 10 which extends through the assembly and includes end portions 20 and 30 extending beyond the cover assemblies 6 and 7. End 20 of shaft 10 is hollowed to provide a portion 21 having a hexagonal cross section dimensioned to receive the correspondingly shaped end of the landing gear 120 drive shaft.

End 30 of shaft 10 is provided with a thrust ring 12 running on a bearing 13 and including diametrically outwardly extending pivot pins 14 (only one shown).

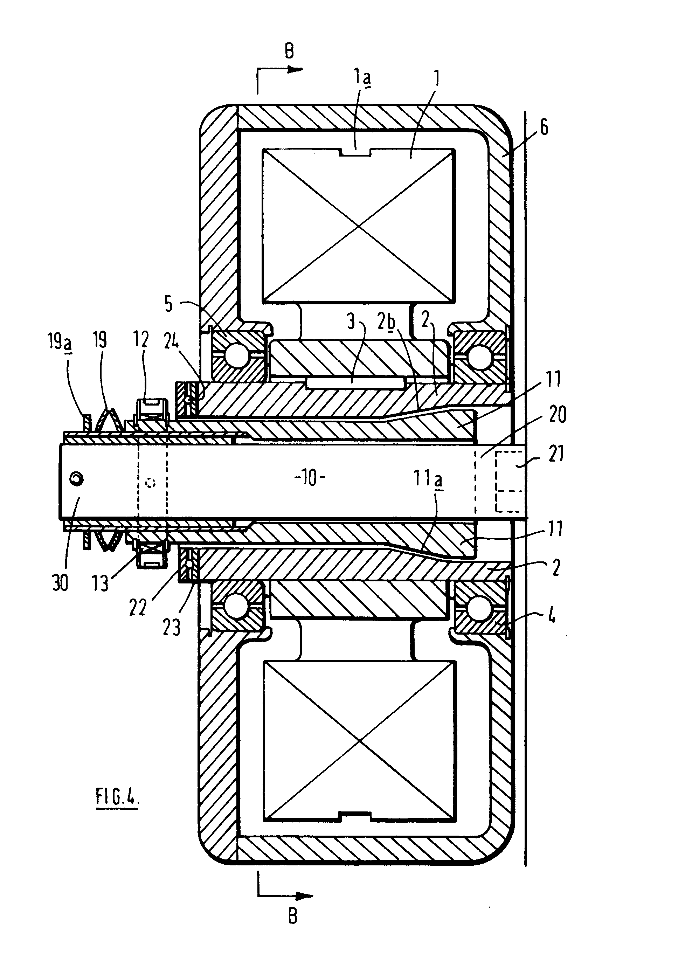

A clutch handle 15 (not shown in Fig.4 for reason of clarity) includes a yoke end 16 extending either side of ring 12 and mounted on pivot pins 14 for pivotal movement in directions normal to the face of cover 7. Yoke end 16 provides eccentric cam surfaces having a flat 17 and curved surface 18. Flat 17 is normally parallel and spaced apart from the planar surface of ring 22 carried on a bearing 23 attached to end face 24 of the hollow shaft 2 which can rotate whilst ring 22 is maintained stationary.

A belville washer 19 acts between a circlip 19a, located on the end 30 of shaft 10 and pivot pins 14 extending outwardly of ring 12 and serves to urge handle 15 into a position in which the flat 17 is parallel to the planar surface of ring 22.

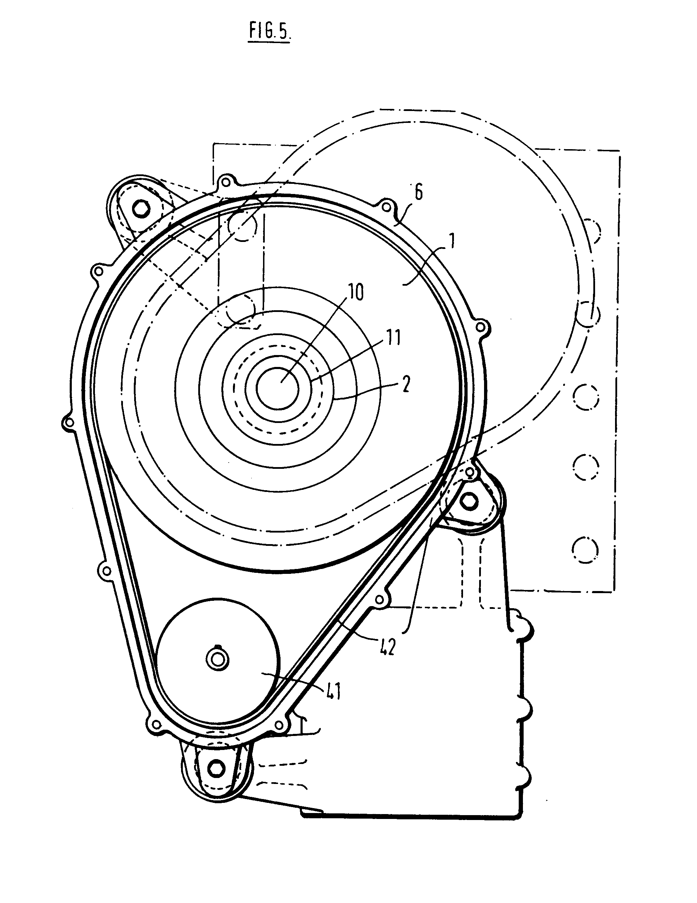

As can be seen best by reference to Figs. 4 and 5 flywheel 1 is driven by a low rated electric motor 40 via drive wheel 41, mounted for rotation on the shaft of motor 40, and drive belt 42 which runs in groove 1a formed in the periphery of flywheel 1. Motor 40 has a rating of 6-7 amps and is connected through a switching arrangement (normally located in the tractor cab) and suitable electric cabling to the trailer lighting circuit. Alternatively, the motor may be driven from the slave battery 116.

A suitable flywheel may be of 20 cam diameter and have a weight of 19.5 kg and produce a maximum torque of 262 kg.m at 2500 rpm.

In use the assembly is mounted adjacent the landing gear leg 122, 123 including gearing 124 for telescopically extending the leg. The hollow end 21 of shaft 10 is located on the leg drive shaft. In this position electric motor 40 projects inwardly under the trailer.

When the legs are required to be extended in order to support or raise the trailer, the switch is thrown to excite motor 40 which is allowed to run for a sufficient time to raise the flywheel speed to approximately 2500 rpm. Clutch handle 15 is then pulled outwardly of face 7 to cause yoke 16 to pivot about pin 14 and bring cam surface 18 into contact with ring 22. Continued movement of arm 15 then results in ring 12, shaft 11 and associated drive shaft 10 being drawn outwardly of the hollow shaft 2 to bring clutch surfaces 2b and 11a into frictional engagement and provide drive to shaft 10 which in turn drives the landing gear shaft (not shown).

Initially the landing gear leg 123 rapidly extends until the wheels 121, 121' (or other support) contact the ground. Subsequently, and more slowly, the forward end of the trailer 110 is raised to an extent sufficient to free the fifth wheel 106. Loss of flywheel torque, resulting from the use of energy to extend the telescopic legs, generally results in the "lift" being slower than the initial extension and it may be necessary for motor 40 to be kept running during the lifting step.

When the trailer has been lifted to the required extent arm 15 is released and returns, under the action of belville washer 10 to the position shown in Fig. 1 thereby disengaging drive between shafts 2 and 11. Further rotation of the flywheel may be stopped by the braking action of the motor (the direction of rotation which may be reversed but with consequential wear on the drive belt 42), or by some form of external braking acting directly on the flywheel.

Clutch handle 15 may of course be replaced by suitable hydraulic or pnematic means to operate the clutch and operation may be controlled from the cab.

In order to prevent a too rapid take up of flywheel energy when the clutch surfaces initially engage, it may be convenient to introduce controlled slip between the clutch surfaces.

In order to minimise the power required to set the flywheel in motion, the flywheel may be of a type in which a substantial portion of the mass of the wheel is initially adjacent the hub thereof, provision being made for the said mass of the flywheel to move radially outwardly away from the hub under the influence of centrifugal forces as the speed of the wheel increases. The said mass should be adjacent the periphery of the flywheel at a speed below that at which the wheel rotates to provide the necessary kinetic energy.

It is to be noted that the invention is not limited to a device in which the flywheel is driven by an electric motor, any suitable drive may be employed, e.g. an air motor.

## Claims

1. A method for operating a telescopically extending member in which the member is extended and retracted by mechanical means driven by a drive shaft, characterised in that drive to the said drive shaft is provided by utilizing the kinetic energy of a flywheel rotating at a predetermined speed attained before the flywheel is coupled to the said drive shaft.

2. The method of claim 1 wherein the flywheel is coupled to the said drive shaft through a clutch means.

3. The method of claim 1 wherein the predetermined speed of the flywheel is attained by use of a low power motor means.

4. A mechanism for extending or retracting a telescopically extending member (123) comprising mechanical means (124) to extend and retract the said member and a drive shaft coupled to said means, characterised in that means for imparting drive to the drive shaft comprises a second shaft (10) coupled to said drive shaft, a flywheel (1) carried for rotation about a shaft (2) capable of being coupled to said second shaft (10), and including motor means (40) to raise the speed of the flywheel (1) to a predetermined level before the said flywheel shaft (2) is coupled to the said second shaft (10) to provide drive to said drive shaft.

5. A mechanism of claim 4 characterised in that the said flywheel shaft (2) is coupled to the said second shaft (10) through an engageable/disengageable clutch means (2a,11b).

6. A mechanism according to claim 4 or 5 characterised in that telescopic member (123) is used to support and/or raise at least a part of an adjacent structure (110).

7. A mechanism according to claim 6 characterised in that the structure is the trailer (110) of a tractor-trailer combination (120) and the telescopic member (123) is secured to the said trailer (110) and forms part of the landing gear (120) of the trailer.

8. A mechanism of any one of claims 4 to 7 characterised in that the motor means comprises a low rated electric motor (40).

9. A mechanism according to claim 8 characterised in that the drive from the electric motor (40) to the flywheel (1) is via a belt (42) looped about the flywheel (1) and the drive wheel (41) of the said motor.

10. A mechanism of any one of claims 4 - 7 characterised in that the motor means comprises an air motor.

**Revendications**

1. Procédé pour actionner un organe d'extension télescopique, dans lequel l'organe est mis en extension et rétracté par des moyens mécaniques entraînés par un arbre d'entraînement, caractérisé en ce que l'entraînement de l'arbre d'entraînement est réalisé en utilisant l'énergie cinétique d'un volant entraîné en rotation à une vitesse prédéterminée qui est atteinte avant que le volant ne soit couplé audit arbre d'entraînement.

2. Procédé selon la revendication 1 dans lequel le volant est couplé à l'arbre d'entraînement par l'intermédiaire d'un embrayage.

3. Procédé selon la revendication 1 caractérisé en ce que la vitesse prédéterminée du volant est atteinte au moyen d'un moteur de faible puissance.

4. Mécanisme pour mettre en extension ou rétracter un organe d'extension télescopique (123) comprenant des moyens mécaniques (124) pour mettre en extension et rétracter ledit organe, et un arbre d'entraînement couplé auxdits moyens, caractérisé en ce que les moyens pour communiquer l'entraînement à l'arbre d'entraînement comportent un deuxième arbre (10) couplé audit arbre d'entraînement, un volant (1) supporté pour une rotation autour de l'arbre (2) qui est capable d'être couplé au deuxième arbre (10), et comportant un moteur (40) pour élever la vitesse du volant (1) à une valeur prédéterminée avant que ledit arbre de volant (2) ne soit couplé au deuxième arbre (10) pour réaliser un entraînement dudit arbre d'entraînement.

5. Mécanisme selon la revendication 4, caractérisé en ce que ledit arbre de volant (2) est couplé audit deuxième arbre (10) par l'intermédiaire d'un embrayage enclenchable désenclenchable (2a, 11b).

6. Mécanisme selon les revendications 4 ou 5 caractérisé en ce que l'organe télescopique (123) est utilisé pour supporter et/ou lever au moins une partie d'une structure adjacente (110).

7. Mécanisme selon la revendication 6, caractérisé en ce que la structure est la remorque (110) d'un ensemble moyens de traction-remorque (120) et l'organe télescopique (123) est fixé à ladite remorque (110) et constitue une partie d'une béquille (120) de la remorque.

8. Mécanisme selon l'une des revendications 4 à 7, caractérisé en ce que le moteur est un moteur électrique de faible rapport (40).

9. Mécanisme selon la revendication 8, caractérisé en ce que l'entraînement du volant (1) à partir du moteur électrique (40) est effectué par l'intermédiaire d'une courroie (42) disposée autour du volant (1) et d'une roue d'entraînement (41) dudit moteur.

10. Mécanisme selon l'une quelconque des revendications 4 à 7, caractérisé en ce que le moteur comprend un moteur à air comprimé.

**Patentansprüche**

1. Verfahren zum Betätigen eines teleskopartig verlängerbaren Bauelements, bei welchem das Bauelement durch eine mechanische Einrichtung verlängert und verkürzt wird, die durch eine Antriebswelle angetrieben wird,
dadurch **gekennzeichnet,** daß
der Antrieb an die Antriebswelle durch Nutzung der kinetischen Energie eines Schwungrades vermittelt wird, welches mit einer vorbestimmten Drehzahl dreht, bevor das Schwungrad mit der Antriebswelle verbunden wird.

2. Verfahren nach Anspruch 1, bei welchem das Schwungrad mit der Antriebswelle durch eine Kupplungseinrichtung verbunden wird.

3. Verfahren nach Anspruch 1, bei welchem die vorbestimmte Drehzahl des Schwungrades durch Verwendung einer motorischen Einrichtung mit kleiner Leistung erhalten wird.

4. Vorrichtung zum Verlängern oder Verkürzen eines teleskopartig verlängerbaren Bauelements (123), welche eine mechanische Einrichtung zum Verlängern und Verkürzen des Bauelements und eine mit dieser Einrichtung verbundene Antriebswelle umfasst,
dadurch **gekennzeichnet**, daß
die Einrichtung zur Vermittlung eines Antriebs an die Antriebswelle eine mit der Antriebswelle verbundene zweite Welle (10) sowie ein Schwungrad (1) umfasst, welches zur Drehung um eine Welle (2) angeordnet ist, die mit der zweiten Welle (10) verbunden werden kann, und weiterhin eine motorische Einrichtung (40), welche die Drehzahl des Schwungrades (1) auf einen vorbestimmten Wert steigern kann, bevor die Schwungradwelle (2) mit der zweiten Welle (10) verbunden wird, um den Antrieb an die Antriebswelle zu vermitteln.

5. Vorrichtung nach Anspruch 4, dadurch **gekennzeichnet**, daß die Schwungradwelle (2) mit der zweiten Welle (10) über eine ein-und-ausrückbare Kupplungseinrichtung (2a, 11b) verbunden ist.

6. Vorrichtung nach Anspruch 4 oder 5, dadurch **gekennzeichnet**, daß das teleskopartige Bauelement (123) zur Abstützung und/oder zur Anhebung wenigstens eines Teils einer benachbarten Struktur (110) verwendet wird.

7. Vorrichtung nach Anspruch 6, dadurch **gekennzeichnet**, daß die Struktur der Anhänger (110) einer Zugmaschine-Anhänger-Kombination (120) ist,und daß das teleskopartige Bauelement an dem Anhänger befestigt ist und einen Teil des Halterades (120) des Anhängers bildet.

8. Vorrichtung nach einem der Ansprüche 4 bis 7, dadurch **gekennzeichnet**, daß die motorische Einrichtung einen Elektromotor (40) kleiner Leistung umfasst.

9. Vorrichtung nach Anspruch 8, dadurch **gekennzeichnet**, daß der Antrieb von dem Elektromotor (40) zu dem Schwungrad (1) durch einen Riemen (42) vorgesehen ist, der um das Schwungrad (1) und das Antriebsrad (41) des Motors gelegt ist.

10. Vorrichtung nach einem der Ansprüche 4 bis 7, dadurch **gekennzeichnet**, daß die motorische Einrichtung einen Luftmotor umfasst.

FIG. 1

FIG. 2.

FIG. 3.

FIG.4.

FIG.5.